# EUROPÄISCHE PATENTSCHRIFT

(11) **EP 1 276 632 B1**
(45) Veröffentlichungstag und Bekanntmachung des Hinweises auf die Patenterteilung: **16.02.2005**
(21) Anmeldenummer: 01940121.5
(22) Anmeldetag: 04.04.2001
(51) Int. Cl.: B60N 2/02, B60N 2/04, B60N 2/18, B60N 2/39

(54) **VORRICHTUNG ZUR VERSTELLUNG EINES FAHRZEUGSITZES**
DEVICE FOR DISPLACING A VEHICLE SEAT
DISPOSITIF POUR DEPLACER UN SIEGE DE VEHICULE

(30) Priorität: 18.04.2000 DE 10019218
(43) Veröffentlichungstag der Anmeldung: 22.01.2003
(73) Patentinhaber: ROBERT BOSCH GMBH, 70442 Stuttgart (DE)
(72) Erfinder: URSEL, Eckhard, 77815 Buehl (DE); GENTER, Gerhard, 77855 Achern (DE); WINTER, Manfred, 77839 Lichtenau (DE); HAUSSECKER, Walter, 77830 Buehlertal (DE); SCHILLER, Herbert, 77830 Buehlertal (DE); MAENNLE, Erik, 77704 Oberkirch (DE); HARTZ, Guenter, 77830 Buehlertal (DE); WOLF, Joerg, 76139 Karlsruhe (DE); PROHASKA, Werner, 77833 Ottersweier (DE); STEUER, Martin, 77830 Buehlertal (DE); LINDE, Hansjuergen, 96450 Coburg (DE); NEUMANN, Uwe, 96050 Bamberg (DE); REHKLAU, Andreas, 96450 Coburg (DE); SCHEER, Dieter, 54439 Fisch (DE)
(86) Internationale Anmeldenummer: PCT/DE2001/001306
(87) Internationale Veröffentlichungsnummer: WO 2001/079020

(56) Entgegenhaltungen:
- EP-A- 0 401 092
- EP-A- 0 636 512
- WO-A-97/48570
- GB-A- 2 024 926
- US-A- 5 586 740

## Beschreibung

### Technisches Gebiet

Insassen von Kraftfahrzeugen können ihre Sitzposition in diesen generell nur statisch voreinstellen. In der Regel erfolgt während der Fahrt keine Verstellung der Sitzposition, die Sitzposition der Fahrzeuginsassen paßt sich den sich ergebenden Fahrsituationen nicht an.

### Stand der Technik

Bei bisher bekannten und heute üblichen Kraftfahrzeugsystemen wählen die Fahrzeuginsassen vor Beginn der Fahrt die ihnen jeweils günstigste und am komfortabelsten erscheinende Sitzposition im Fahrzeug individuell vor. Während der Fahrt sind die Fahrzeuginsassen generell Schubkräften, resultierend aus der Querbeschleunigung, beispielsweise während der Passage von Kurven, ausgesetzt. Ferner treten Schubkräfte auf, die aus Brems- und Verzögerungsphasen während der Fahrt des Kraftfahrzeuges herrühren. Während der Fahrt ergeben sich aufgrund der auftretenden, auf die Insassen einwirkenden dynamischen, fahrsituationsabhängigen Kräfte, Schubspannungen zwischen den Polstern der Fahrzeugsitze und den Insassen des Fahrzeuges, die den Fahrzeuginsassen durchaus als unangenehm erscheinen können. Insbesondere gilt dies dann, wenn der Betrag der Schubspannungen den jeweiligen persönlich noch akzeptabel erscheinenden Grenzwert für den jeweiligen Fahrzeuginsassen überschreitet.

Aus der EP-A-0 401 092 ist zum Beispiel eine dem Oberbegriff entsprechende Einrichtung bekannt, die eine dynamische Anpassung der Neigung des Fahrzeugsitzes insbesondere während der Passage von Kurven vorsieht.

### Darstellung der Erfindung

Mit der erfindungsgemäß vorgeschlagenen Lösung, welche durch die Merkmale des Anspruchs 1 definiert ist, läßt sich eine sphärische Verstellung eines Fahrzeugsitzes erzielen, der sich der jeweiligen Fahrsituation des Fahrzeuges dergestalt anpaßt, daß die auf die Person, die auf dem Fahrzeugsitz Platz genommen hat, einwirkenden Querbeschleunigungskräfte sowie Schubkräfte minimiert sind.

Gemäß einer Ausführungsvariante einer sphärischen Verstellmöglichkeit für Fahrzeugsitze wird ein die Sitzflächen unterstützendes rahmenförmiges Profil von vier individuell ansteuerbaren Hubspindelgetriebemotoren aufgenommen. In der Nullage der Hubspindelposition stehen die Hubspindeln parallel zueinander. Bei dieser gewählten Anordnung an der Unterseite des Fahrzeugsitzunterbaus ist eine zusätzliche Höhenverstelleinrichtung entbehrlich. Ein Verkippen des Fahrzeugsitzes um dessen Längsachse ist ebenso möglich, wie eine Nickbewegung des Fahrzeugsitzes um seine Querachse.

Gemäß einer weiteren Variante wird die Sitzfläche eines Fahrzeugsitzes in vier Lenkern abgestützt, wobei zwei schräg zueinander stehende Viergelenk-Ketten ausgebildet werden können. Die Viergelenk-Ketten bilden zueinander eine trapezförmige Anordnung, so daß der Momentanpol einer seitlichen Kippbewegung sowie der Bewegung des Fahrzeugsitzes nach vom und nach hinten individuell bestimmt werden kann. Der Momentanpol befindet sich bei dieser Ausführungsvariante in einem deutlichen Abstand oberhalb der Sitzfläche. Bei dieser Ausführungsvariante ist besonders von Vorteil, daß sich eine Drehachse des Sitzes einstellt, die oberhalb des Schwerpunkts der Person liegt. Im Crashfalle wird diese in eine Lage gedrückt, die gegen die Richtung des Crashes wirkt, so daß der Sitz samt der darauf sitzenden Person gegen die Auswirkungen eines solchen Ereignisses geschützt sind.

In einer weiteren Ausführungsvariante einer sphärischen Verstellmöglichkeit eines Fahrzeugsitzes wird als Verstellkulisse ein kugelschalenförmiges Element benutzt. Das kugelschalenförmige Element wird von 3 oder von 4 Gleitpolstern aufgenommen, welche ihrerseits in Aufnahmen an seitlichen Schienen des Sitzes abgestützt sind. Zwischen den kugelschalenförmigem Element und den Gleitpolstern ist ein die Reibung verbesserndes Gleitverhalten durch verbesserte Reibpartner herbeigeführt.

Bei dieser Konfiguration ist eine Verstellung des Sitzes mit lediglich einer Verstelleinheit möglich, wobei sowohl ein Kippen des Sitzes um dessen Längsachse als auch ein Kippen des Sitzes um dessen Querachse ermöglicht wird. Bei dieser Ausführungsvariante sind keine Lenker und diese verbindende Gelenke erforderlich. Es läßt sich ferner ein definierter fester Drehpunkt des Fahrzeugsitzes ausmachen. Die Verstellung der Kugelschale kann mittels Lenker und Verstellgetrieben an der Sitzschale erfolgen, die sich dann in diesem Punkt dreht.

Schließlich ist die Ausbildung einer sphärischen Fahrzeugsitzverstellung mit zwei Starrlenkern und einem beweglichen dritten Lenker möglich. Die beiden Starrlenker sind im hinteren Bereich der Sitzfläche des Fahrzeugsitzes angebracht, während der im vorderen Bereich der Sitzfläche aufgenommene bewegliche dritte Lenker tiefer angeordnet ist. Dadurch stellt sich der Drehpol am vorderen Bereich des Sitzes deutlich tiefer als im hinteren Bereich des Sitzes ein, wodurch sich die momentane Drehachse als schrägverlaufend von der mittleren Lehnenhöhe, d.h. im Schnittpunkt der beiden hinteren Starrlenkerachsen bis zum vorderen Drehpunkt im Sitzpolster einstellt. Durch die schräg angeordnete Drehachse wird der Sitz bei einer seitlichen Verstellung zusätzlich in eine unterstützende Drehung um die Hochachse gezwungen. Bei dieser Konfiguration werden zur Betätigung der Lenker zwei Verstellantriebe verwendet.

Bei einer weiteren Variante wird ein Fahrzeugsitz auf einem schräg aufgenommenen Sitzuntergestell befestigt. Aufbauend auf den sphärischen Verstellen mit vier Starrlenkern - wie bereits oben beschrieben - wird bei dieser Variante das Verstellen des Fahrzeugsitzes um die Querachse unterbunden. Die vorhandene Lenkergeometrie wird zur Höhenverstellung genutzt. Dabei werden die beiden parallel zueinander stehenden fünf Gelenkketten zu ihrer Längsachse derart gekippt, daß der Schnittpunkt der jetzt schräg zueinander stehenden ebenen Getriebe in einer Momentanpollinie sich über der Sitzfläche befindet.

Schließlich ist in einer abschließenden Ausführungsvariante ein Sitzunterbau mit einer zentralen Kraftaufnahme, die innerhalb der den Sitz aufnehmenden Führungsschiene angeordnet ist, denkbar. Durch die zentrale Kraftaufnahmeanordnung in der Mitte des Fahrzeugsitzunterbaus kann eine Entlastung der an den vier Ecken aufgenommenen Hubspindelgetriebemotoren erreicht werden, so daß eine Geräuschentwicklung durch sich einstellendes Spiel unterbleibt und die Hubspindelgetriebemotoren im wesentlichen vom Gewicht des Fahrzeugsitzes und der auf dem Sitz befindlichen Person entlastet sind.

### Zeichnung

Anhand der Zeichnung wird die Erfindung nachstehend näher erläutert.

Es zeigt:
- Fig.: 1 einen Fahrzeugsitzunterbau nach dem 4-Säulen-Prinzip
- Fig. 2: das Gleitschienenrahmenprofil, welches mit seitlich sich erstreckenden, die Struktur verstärkenden Verstrebungen versehen ist,
- Fig. 3: eine teilweise geschnittene Darstellung eines Hubspindelmotors mit Lagerung und Rahmenprofil,
- Fig. 4: ein Schaltschema für die Ansteuerung von vier Getriebemotoren, die Lagerungspunkten eines Fahrzeugsitzunterbaus zugeordnet sind,
- Fig. 5: eine sphärische Sitzverstellung mit vier Starrlenkern und gemeinsamen Verstellantrieb,
- Fig. 6: eine Darstellung des sich einstellenden Momentalpols für die sphärische Sitzverstellung nach Fig. 5,
- Fig. 7: eine sphärische Sitzverstellung mit in Gleitpolstern gelagerter kulissenförmiger den Fahrzeugsitz aufnehmenden Kugelschale,
- Fig. 8: eine sphärische Sitzverstellung mit zwei Starrlenkern im hinteren Bereich des Fahrzeugsitzes und einem dritten beweglichen Lenker im vorderen Bereich,
- Fig. 9: eine sphärische Sitzverstellung mit drei Starrlenkern,
- Fig. 10: eine sphärische Sitzverstellung mit schräg aufgehangenem Sitzuntergestell,
- Fig. 11: die Darstellung einer sphärischen Sitzverstellung mit einem Kugelsegment, welches auf an Sitzschienen aufgenommenen Aufnahmen aufliegt und
- Fig. 12: eine sphärische Verstellung eines Fahrzeugsitzunterbaus mit 4 Säulen, wobei in der Mitte des Unterbaus eine zentrale Kraftaufnahme angedeutet ist.

### Ausführungsvarianten

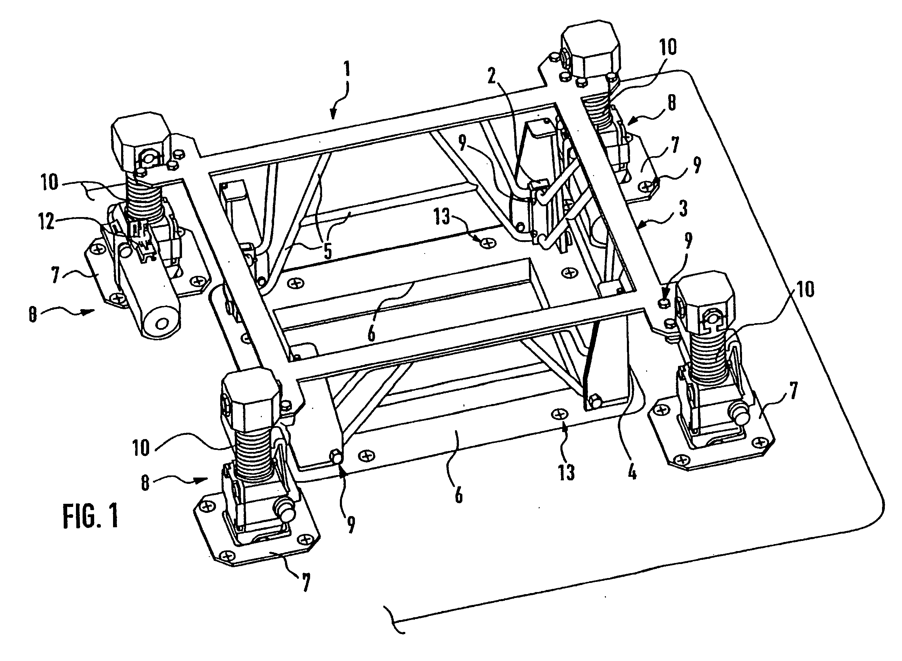

Fig. 1 zeigt einen Fahrzeugsitzunterbau nach dem 4-Säulen-Prinzip.

Bei dieser Konfiguration einer sphärischen Sitzverstellung 1 ist ein rechteckiges Rahmenprofil als Gleitschuhhalter 3 vorgesehen, an welchem einzelne Gleitschuhe 2 ausgebildet sind. Der Gleitschuhhalter 3 wird durch eine Verstrebung 5 verstärkt, um den Belastungen durch das Gewicht des Fahrzeugsitzunterbaus sowie der Person, die den Fahrzeugsitz jeweils einnimmt, Stand zu halten.

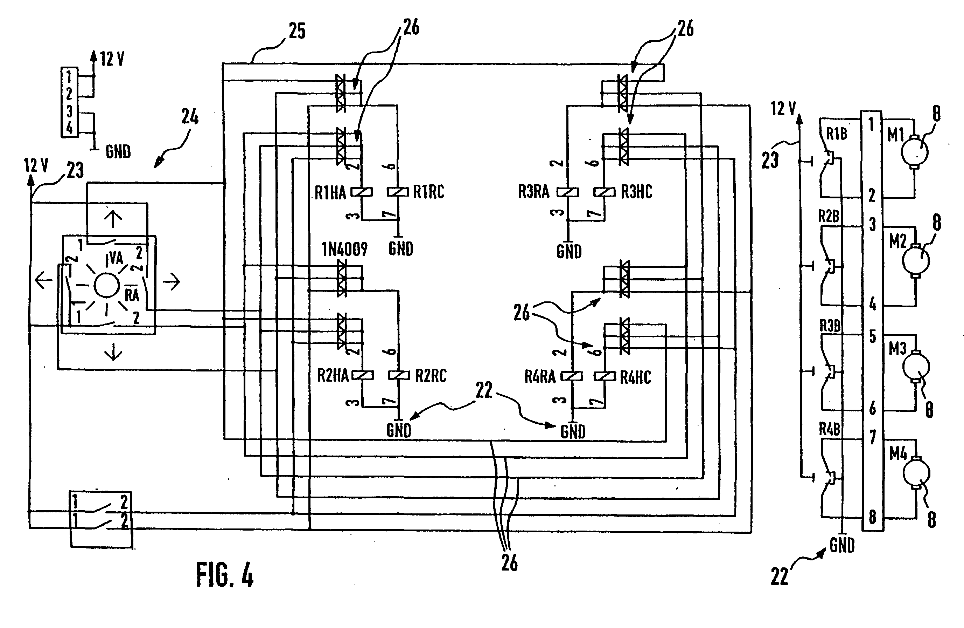

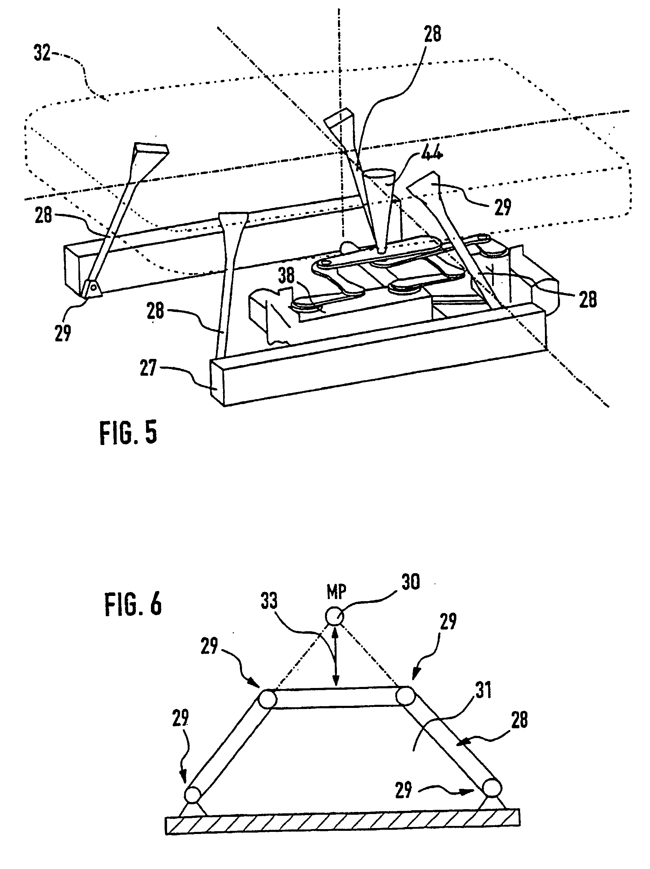

Die an dem Gleitschuhhalter 3 ausgebildeten Gleitschuhe 2 werden von Gleitschuhführungen 4 umschlossen. Die Gleitschuhführungen 4 sind am oberen Ende mit einem Anschlag 11 versehen, um die Gleitschuhe 2 am Verlassen der sie umgebenden Gleitschuhführungen 4 zu hindern. Die Gleitschuhführungen 4 sind an einer Grundplatte 6 aufgenommen, die beispielsweise den Boden des Fahrgastraumes eines Kraftfahrzeuges darstellt. Den Eckpunkten der Grundplatte 6, durch Verschraubungen 13 mit dem Fahrzeugboden verbunden, sind Grundplatten 7 zugeordnet, die jeweils einen Hubspindelgetriebemotor 8 aufnehmen, mit welchem der Gleitschuhhalter 3 bewegt werden kann. Die Bewegung kann um die Längsachse einer Sitzfläche 32 (vergleiche Fig. 5) erfolgen, sie kann bei entsprechender Ansteuerung des Getriebemotors 8 durch eine Ansteuerung 24 (vergleiche Fig. 4) auch um die Querachse des Fahrzeugsitzes erfolgen, eine Nickbewegung darstellend. Die Getriebemotoren 8, die die sphärische Verstellungen des Fahrzeugsitzes ermöglichen, sind über Verschraubungen 9 mit der Grundplatte 7 des Fahrzeugbodens verbunden und über Verschraubungen 9 mit dem Gleitschuhalter 3.

Die Getriebemotoren 8 enthalten einen Spindeltrieb, wobei die Spindeln von Federelementen 10 zur Unterstützung der Aufwärtsbewegung und zur Entlastung der miteinander kämmenden Getriebekomponenten umgeben sein können - wie in Fig. 1 dargestellt. Die Federelemente 10 verdecken die durch die Getriebemotoren 8 angetriebenen Spindeln. An den Getriebemotoren 8 sind jeweils elektrische Anschlüsse vorgesehen, mit denen die Getriebemotoren 8 mit einer Spannungsversorgung 23 in Verbindung stehen.

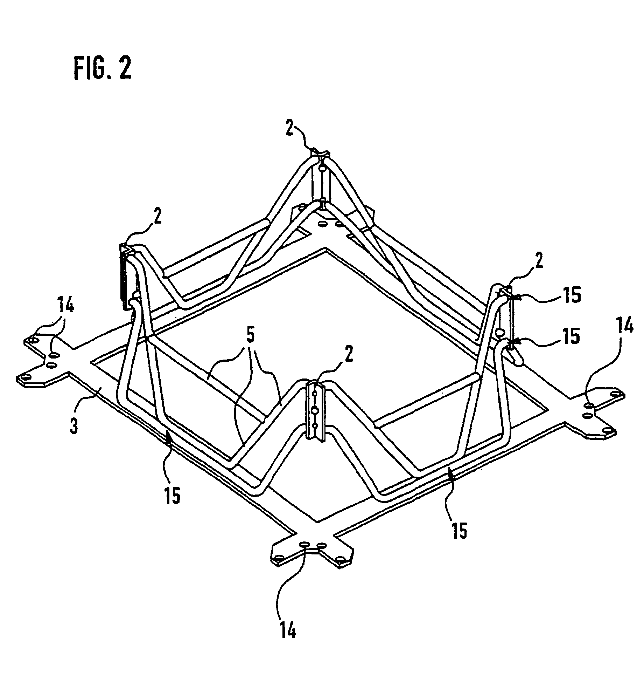

In Fig. 2 ist das als Gleitschuhhalter dienende Rahmenprofil von der Unterseite aus gesehen dargestellt.

Die an der Unterseite des Gleitschuhhalters 3 ausgebildeten Verstrebungen, die sich im wesentlichen über die Längsseite des Rahmenprofiles erstrecken, sind an ihren Eckpunkten über Winkelelemente miteinander verbunden. Die Winkelelemente stellen die Gleitschuhe 2 dar und sind (vergleiche Fig. 1) von den Gleitschuhführungen 4 umgeben. An den Eckpunkten des Gleitschuhhalters 3 sind etwa einen rechten Winkel einschließende Überstände ausgeführt, an denen Bohrungen 14 vorgesehen sind. Über die Bohrungen 14 wird der Gleitschuhhalter 3 mit den Spindeln der vier Getriebemotoren 8 verbunden. Die den Gleitschuhhalter 3 verstärkende Verstrebungsstruktur 5 ist mit den die Gleitschuhe 2 bildenden Winkelelementen verschweißt und ebenfalls über eine Schweißverbindung mit der Unterseite des Gleitschuhhalters 3 verbunden.

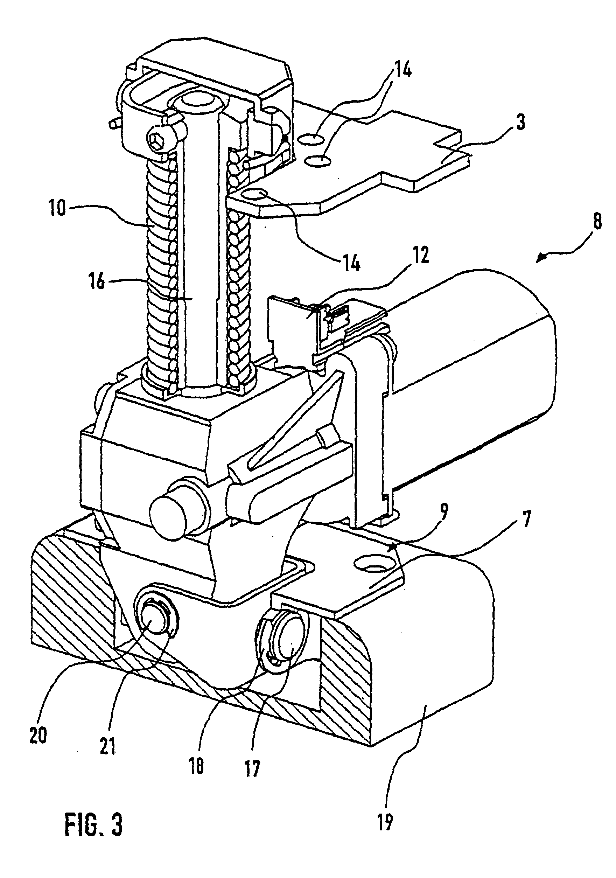

In der Darstellung gemäß Fig. 3 ist ein teilweise geschnittener Hubspindelgetriebemotor mit Lagerung und Eckbereich des Gleitschuhhalters dargestellt.

Der eine Hubspindel 16 in Rotation versetzende Getriebemotor 8 ist mit einem elektrischen Anschluß 12 versehen, mit dem der Getriebemotor 8 mit einer Spannungsversorgung 23 verbindbar ist. Am unteren Ende des Getriebemotors 8 ist in einer Lagerung 19 eine Ausnehmung vorgesehen, in welche die Grundplatte 7 eingelassen ist. Die Grundplatte 7 wird vorzugsweise mit der Lagerung 19 verschraubt. In in der Lagerung 19 vorgesehenen Hohlraum ist ein erster Bolzen 17 vorgesehen, der mit einem Sicherungsring 18 versehen ist und eine erste Drehbewegung des Hubspindelgetriebemotors 8 ermöglicht.

In einem U-förmig das untere Ende des Spindeltriebs umschließenden Träger ist ein weiterer Bolzen 20 eingelassen, der mit einem Sicherungsring 21 gesichert ist, wodurch eine Bewegung des Spindeltriebs um eine zweite Drehachse ermöglicht wird. Im oberen Bereich des Hubspindelgetriebemotors 8 befindet sich eine durch den Elektromotor 8 angetriebene Spindel 16, die ihrerseits von einem Federelement 10 umschlossen ist. Das Federelement 10 ist so dimensioniert, daß es eine Aufwärtsbewegung des hier nur angedeuteten Gleitschuhhalters 3 unterstützt. Zur Verbindung des Gleitschuhhalters 3 mit dem die Eckpunkte jeweils unterstützenden Hubspindelgetriebemotor 8 sind in das den Gleitschuhhalter 3 bildende Rahmenprofil Bohrungen 14 eingelassen. In hier nicht näher dargestellter Weise wird die Oberseite der Spindel 16 des Hubspindelgetriebemotors 8 mit den Eckpunkten des Gleitschuhhalters 3 verschraubt.

Aus der Darstellung gemäß Fig. 4 geht ein Schaltschema für eine Ansteuerung von vier Getriebemotoren hervor, die Lagerungspunkten einer Fahrzeugsitzunterstruktur zugeordnet sind.

Sowohl die Ansteuerung 24 ist mit einer Spannungsversorgung 23 verbunden, die beispielsweise durch eine Spannungsquelle in ein Kraftfahrzeug gebildet werden kann. Gleiches gilt für die im rechten Bereich der Fig. 4 dargestellten vier Hubspindelgetriebemotoren 8, die ebenfalls über eine Spannungsförderung 23 mit Spannung beaufschlagt sind und über eine Erdung 22 mit der Masse des Kraftfahrzeuges verbunden sind.

Über die Ansteuerung 24 kann eine Ansteuerung der entsprechenden Hubspindelgetriebemotoren in den Ecken des Gleitschuhhalters erfolgen, wobei die Ansteuerung 24 ein Leitungssystem 25 umfaßt sowie elektronische Bauelemente vorzugsweise Dioden. Die in Gruppen jeweils angeordneten elektronischen Bauelemente in Form von Dioden sind ebenfalls über eine Erdung 22 mit der Masse verbunden. Über die Ansteuerung 24 läßt sich der Fahrzeugsitz entsprechend der die Ansteuerung umgebenden Pfeile in jede beliebige Richtung positionieren, wobei dies auch unabhängig von Verstellbefehlen durch den Fahrzeuginsassen erfolgen kann, sondern auch der jeweiligen Fahrsituation des Kraftfahrzeuges entsprechend automatisch erfolgt.

Aus der Darstellung gemäß Fig. 4 geht eine von vier Starrlenkern abgestützte Sitzfläche eines Fahrzeugsitzes hervor.

Die Sitzfläche 32 ist in Anlenkpunkte 29 von vier Starrlenkern 28 aufgenommen. Die Starrlenker 28 sind in Gestalt zweier schräg zueinander stehender Viergelenkketten angeordnet, die zueinander wiederum einen trapezförmigen Verlauf (vergleiche Fig. 6) bilden. Am unteren Ende der Starrlenker 28 sind diese an sich längs zur Sitzfläche 32 erstreckenden Sitzschienen 27 aufgenommen. Durch diese Anordnung der Starrlenker 28 ist es möglich, den Momentalpol 30 (vergleiche Fig. 6), d.h. den für diese Position geltenden aktuellen Drehpunkt der seitlichen Bewegung um die Längsachse und der Bewegung nach vorne und hinten um die Querachse individuell zu bestimmen. So bewegt sich der Drehpunkt in einem Momentalpolfeld, der sich deutlich überhalb der Sitzfläche 32 befindet. Mit strichpunktierten Linien sind in der Darstellung gemäß Fig. 5 die Hochachse, die Längsachse sowie die Querachse bezogen auf die Sitzfläche 32 eingezeichnet. Die motorische Verstellung der Starrlenker erfolgt durch zwei unabhängig voneinander betätigbare Verstelleinheiten 38, 41, die zwischen den Sitzschienen 27 angeordnet sind und sich unterhalb der Sitzfläche 32 befinden.

Aus Fig. 6 geht eine Darstellung des sich einstellenden Momentalpoles 30 für die sphärische Sitzverstellung mit vier Starrlenkern nach Fig. 5 hervor.

Die in Gelenkpunkte 29 an den Sitzschienen 27 jeweils angelenkten Starrlenker 28 bilden ein Viergelenk, welches gemäß der Darstellung in Fig. 5 in Richtung der Längsachse der Sitzfläche 32 gesehen leicht schräg zueinander angeordnet sind. Denkt man sich die Starrlenker 28 weiter nach oben verlaufend, d.h. werden die Wirkungslinien zum Schnitt gebracht, stellt sich der Momentalpol 30 ein. Der Momentalpol befindet sich in der Konfiguration gemäß Fig. 5, die der Fig. 6 zugrundeliegt in einem Abstand 33 oberhalb der Sitzfläche 32. Dies wirkt sich günstig auf das Wahrnehmungsvermögen der Sitzverstellvorgänge durch den den Fahrzeugsitz jeweils einnehmenden Fahrzeuginsassen aus.

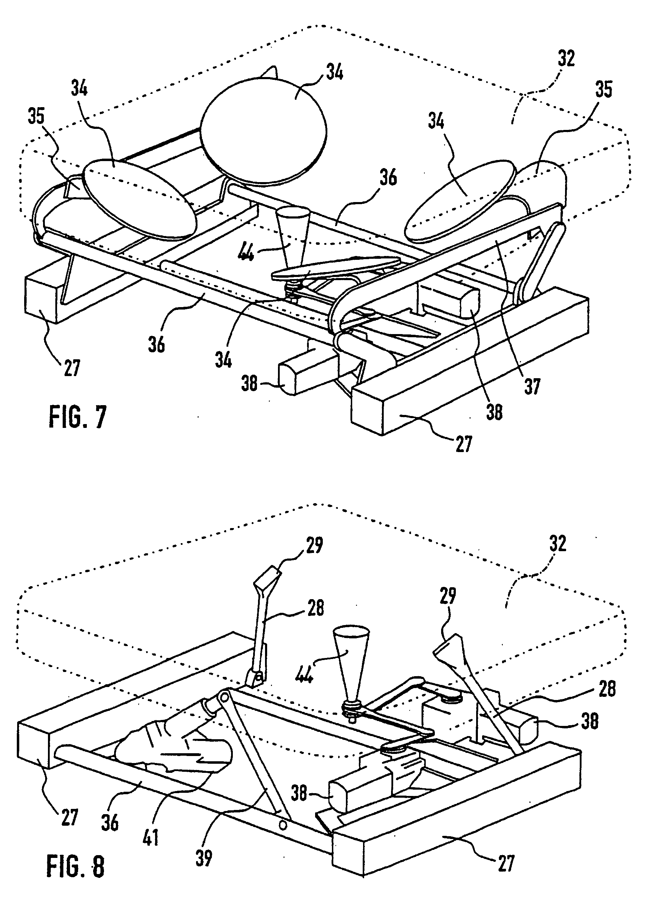

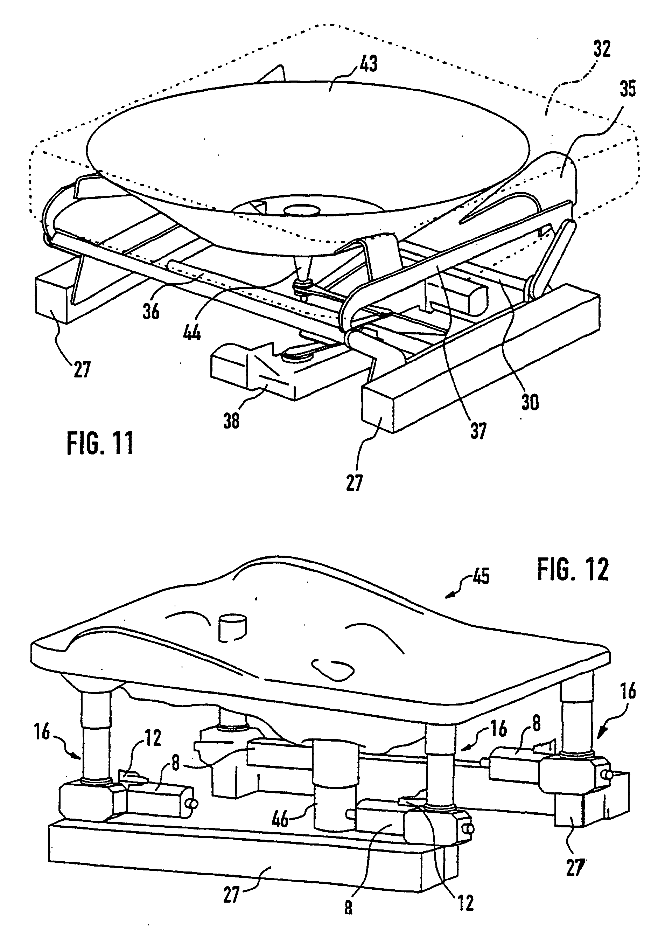

In der Darstellung gemäß Fig. 7 ist eine sphärische Sitzverstellung mit in Gleitpolstern gelagertem kulissenförmigen, den Fahrzeugsitz aufnehmenden kugelschalenförmigen Element dargestellt. Bei dieser Ausführungsvariante einer sphärischen Sitzverstellung 1 ist die Sitzfläche 32 eines Fahrzeugsitzes mit einem Kugelschalensegment 43 (vergleiche Fig. 11) versehen, welches in der Darstellung gemäß Fig. 7 nicht dargestellt ist. Dieses Kugelschalensegment 43 wird von drei oder vorzugsweise vier Gleitpolstern 34 unterstützt. Die Gleitpolster können das dargestellte kreisförmige Aussehen haben, sie können auch untereinander seitlich verbunden sein oder rechteckförmig oder quadratisch ausgebildet sein und sind jeweils an Aufnahmeelementen 35 befestigt, die ihrerseits mit Schienen 37 befestigt sind. Die Schienen am Sitz 37 sind über gelenkig gelagerte Hebel mit den Sitzschienen 27, die sich auf dem Fahrzeugboden befinden, befestigt, wobei die Schienen 37 untereinander über Quertraversen 36 miteinander verbunden sein können. Durch die Gleitpolster 34 stellt sich ein verbessertes Reibverhalten zwischen dem kugelschalenförmigen Segment 43 unterhalb der Sitzfläche 32 ein. Es ist sowohl ein Kippen der Sitzfläche 32 des Fahrzeugsitzes um die Längsachse möglich als auch eine Nickbewegung der Sitzfläche 32 des Fahrzeugsitzes um dessen Querachse. Bei dieser Ausführungsform können einzelne Starrlenker und diese miteinander Verbindende vollständig entfallen. Die Ausführungsvariante gestattet in vorteilhafter Weise die Definition eines festen Drehpunktes der Sitzfläche 32 des sphärisch zu verstellenden Fahrzeugsitzes. Unterhalb der Sitzfläche 32, zwischen den Sitzschienen 27 sind zwei Verstellantriebe Verstelleinheiten 38 bzw. 41 aufgenommen, welche jeweils auf eine der Quertraversen 36 einwirken und eine Verstellung der Schienen 37 am Sitz herbeiführen.

In der Darstellung gemäß Fig. 8 ist eine sphärische Sitzverstellung mit zwei Starrlenkern im hinteren Bereich eines Fahrzeugsitzes und einem dritten beweglichen Lenker in dessen vorderen Bereich dargestellt.

Im hinteren Bereich von Sitzschienen 27, die mit dem Fahrzeugboden verbunden sind, sind Starrlenker 28 angelenkt, die ihrerseits an ihren oberen Enden in Gelenkpunkte 29 mit der Sitzfläche 32 des Fahrzeugsitzes verbunden sind. Bei dieser Variante einer sphärischen Sitzverstellung 1 ist ein vorderer, beweglicher dritter Lenker 39 mit einer eigenen Verstelleinheit 41 versehen. Mittels dieser Verstellmotorik 41 ist es möglich, die Sitzfläche 32 des Fahrzeugsitzes an deren oberen Anlenkpunkten 29 seitlich in Richtung beispielsweise auf eine Fahrzeugtür zu verdrehen, um den Fahrzeuginsassen das Ein- bzw. Aussteigen zu erleichtern. Abhängig von der Fahrsituation kann eine Verdrehung der Sitzfläche 32 des Fahrzeugsitzes auch abhängig von der aktuellen Fahrsituation erfolgen. Bei dieser Ausführungsvariante der sphärischen Sitzverstellung 1 sind den hinteren Starrlenkern 28 jeweils zwei unabhängig voneinander betätigbare Verstelleinheiten 38 zugeordnet. Gemäß dieser sphärischen Sitzverstellung 1 ist sowohl ein Kippen der Sitzfläche 32 des Fahrzeugsitzes um die Längsachse möglich, als auch eine Nickbewegung der Sitzfläche 32 um die Querachse, wobei bei dieser Ausführungsvariante lediglich drei Lenker, ein beweglicher Lenker 39 sowie zwei Starrlenker 28 im hinteren Bereich erforderlich sind. Es läßt sich eine quasi statische und die dynamische von der Fahrsituation abhängige sphärische Verstellung des Farhzeugsitzes voneinander trennen, wobei keine Kopplung für die Drehung um die Hochachse der Sitzfläche 32 des Fahrzeugsitzes erforderlich ist.

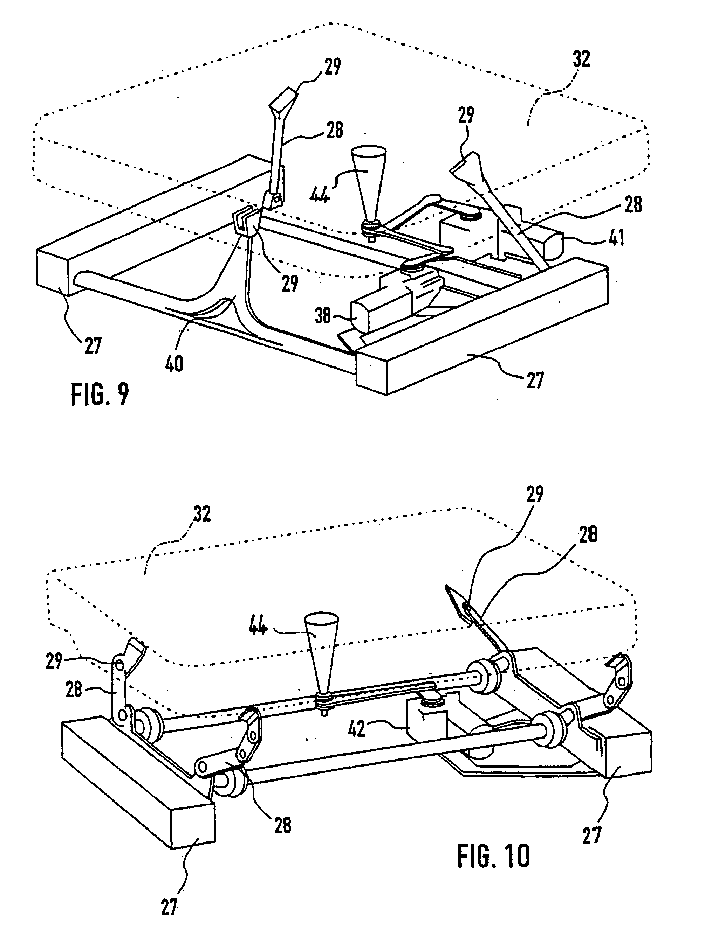

Aus Fig. 9 geht eine sphärische Sitzverstellung mit drei Starrlenkern hervor, wobei sowohl die im hinteren Bereich der Sitzfläche 32 angeordneten Starrlenker 28 als auch der vordere Lenker 40 in Anlenkpunkte 29 unterhalb der Sitzfläche angelenkt sind. Bei dieser Ausführungsvariante einer sphärischen Sitzverstellung wurden die beiden vorderen Starrlenker 28 durch einen einzigen vorderen Lenker 40 ersetzt. Durch die tiefere Anlenkung des vorderen Lenkers 40 stellt sich ein Drehpol ein, der deutlich tiefer als der durch die beiden hinteren Starrlenker 28 gebildete Drehpol liegt. Dadurch läßt sich eine momentane Drehachse einstellen, die schräg von der mittleren Lehnenhöhe, d.h. den Schnittpunkt der beiden hinteren gedachten Verlängerungen der Starrlenker 28 bis zum vorderen Drehpunkt der Sitzfläche 32 herbeiführen. Die schräg angeordnete Drehachse zwingt der Sitzfläche 32 des Fahrzeugsitzes bei einer seitlichen Verstellung zusätzlich eine unterstützende Drehung um die Hochachse auf. Die motorische Verstellung kann durch zwei zwischen den Sitzschienen 27 aufgenommene Verstelleinheiten 38 bzw. 41 erfolgen. Auch in dieser Konfiguration sind die Starrlenker gelenkig in Gelenkpunkten 29 unterhalb der Sitzfläche 32 mit dieser verbunden, gleiches gilt für den vorderen Lenker 40, der ebenfalls unterhalb der Sitzfläche 32 des Fahrzeugsitzes im Gelenkpunkt 29 angelenkt ist.

Aus Fig. 10 geht eine sphärische Sitzverstellung 1 mit schräg aufgehangenem Sitzuntergestell hervor.

Bei dieser Variante ist eine Bewegung der Sitzfläche 32 des Fahrzeugsitzes um deren Querachse unterbunden. Die beiden parallel zueinander stehenden Starrlenkerkonfigurationen 28 sind als 5-Gelenk-Ketten zu ihrer Längsachse derart gekippt, daß der Schnittpunkt der gedachten Verlängerungen der schräg zueinander stehenden aus Starrlenkern 28 gebildeten ebenen Getriebe sich in einer Momentalpollinie über der Sitzfläche 32 des Fahrzeugsitzes treffen, vergleichbar mit der Konfiguration gemäß den Figuren 5 und 6. Unterhalb der Sitzfläche 32 des Fahrzeugsitzes ist eine Verstelleinheit ein Verstellgetriebe 42 vorgesehen, welche einen Hubspindelgetriebemotor 8 gemäß der vorstehenden Beschreibung enthält. Die aus Starrlenkern 28 gebildeten schräg zueinander positionierten Fünfgelenkketten sind über Traversen miteinander verbunden, wobei die Starrlenker 28 jeweils an Sitzschienen 27 die ihrerseits am Fahrzeugboden aufgenommen sind, befestigt werden können.

Fig. 11 zeigt eine sphärische Verstellung eines Fahrzeugsitzes mit einem kulissenförmigen Kugelschalensegment.

Die unterhalb der Sitzfläche 32 angeordnete Kugelschale 43 kann aus einem geringen Reibungskoeffizienten aufweisenden Material bestehen und stützt sich vorzugsweise auf Aufnahmen 35 ab. Die Aufnahmen sind an Schienen 37 an der Sitzfläche 32 befestigt, die ihrerseits durch Quertraversen 36 miteinander in Verbindung stehen. Das kulissenförmige Kugelschalensegment 43 kann auch gemäß der Darstellung in Fig. 7 auf Gleitpolstern 34 aufgenommen sein, die ihrerseits auf den Aufnahmeelementen 35 ruhen. Der Drehpunkt der Sitzfläche 32 ist fest in einem Punkt definiert, der durch den eingezeichneten Kegel 44 identifizierbar ist. Mittels des unterhalb der Sitzfläche 32 angeordneten Verstellantriebes 38 kann eine Verdrehung der Sitzfläche 32 um den Kegel 44 erfolgen, welcher sich in Richtung der Hochachse der Sitzfläche 32 des Fahrzeugsitzes erstreckt.

Schließlich ist in der Darstellung gemäß Fig. 12 eine sphärische Sitzverstellung gemäß des 4-Säulen-Prinzipes dargestellt.

Aus dieser Konfiguration geht hervor, daß an den Endpunkten der Sitzschienen 27, die mit dem Fahrzeugboden des Fahrgastraumes verbunden sind, jeweils Hubspindeln 16 antreibende Getriebemotoren 8 aufgenommen sind. Die Getriebemotoren 8 verfügen sämtlich über einen Elektroanschluß 12, über welchen sie mit einer Spannungsversorgung in Verbindung bringbar sind. Ferner kann in der Mitte zwischen den Sitzschienen 27 unterhalb des Sitzunterbaus 45 eine zentrale Kraftaufnahme 46 angeordnet werden. Durch die zentrale Kraftaufnahme 46 unterhalb des Sitzunterbaus 45 können die Hubspindeln vom Gewicht des Fahrzeugsitzes sowie der darauf sitzenden Person entlastet werden, wodurch sich eine längere Lebensdauer der eine Rotationsbewegung übertragenden, die Verstellbewegung erzeugenden Spindelgetriebe erzielen läßt. Aufgrund der Lastwechsel sich einstellende Abnutzungserscheinungen sowie Geräuschentwicklung können somit wirksam unterdrückt werden. Durch die Anordnung der Spindelgetriebe 16 an den Ecken des Sitzunterbaus 45 läßt sich eine zusätzlich vorzusehende Höhenverstelleinrichtung komplett vermeiden.

### Bezugszeichenliste

- 1: Sphärische Sitzverstellung
- 2: Gleitschuh
- 3: Gleitschuhhalter (Rahmenprofil)
- 4: Gleitschuhführung
- 5: Verstrebung
- 6: Führungsplatte
- 7: Grundplatte
- 8: Getriebemotor
- 9: Verschraubung
- 10: Federelement
- 11: Anschlag
- 12: elektrischer Anschluß
- 13: Verschraubung
- 14: Bohrung
- 15: Schweißstelle
- 16: Hubspindel
- 17: Bolzen
- 18: Sicherungsring
- 19: Lager
- 20: Bolzen
- 21: Sicherungsring
- 22: Erdung
- 23: Spannungsversorgung
- 24: Verstellansteuerung
- 25: Leitungssystem
- 26: elektronisches Bauelement
- 27: Sitzschiene
- 28: Starrlenker
- 29: Gelenkpunkt
- 30: Momentalpol
- 31: Trapez
- 32: Sitzfläche
- 33: Abstand Momentalpol-Sitzfläche
- 34: Gleitpolster
- 35: Aufnahmeelement
- 36: Traverse
- 37: Schiene am Sitz
- 38: Verstelleinheit
- 39: beweglicher dritter Lenker
- 40: vorderer Lenker
- 41: Verstelleinheit
- 42: Verstellgetriebe
- 43: Kugelschalensegment
- 44: Kegel
- 45: Sitzunterbau
- 46: zentrale Kraftaufnahme

## Patentansprüche

1. Einrichtung zur Verstellung eines Fahrzeugsitzes, der über einen oder mehrere Getriebemotoren (8, 38, 41, 42) in seiner Position verstellt werden kann, wobei die Getriebemotoren (8, 38, 41, 42) über eine Ansteuerung (24) betätigbar sind wobei die Einrichtung, einen Fahrzeugsitzunterbau (3, 32, 45) aufweist, der durch Lagerungsbauteile (16; 28, 29, 40; 34, 35, 43) an mindestens drei Punkten eines Fahrzeuges gelagert werden kann, **dadurch gekennzeichnet, daß** mindestens ein Lagerungspunkt (16, 29, 34) relativ zu den verbleibenden Lagerungspunkten des Fahrzeuges derart variierbar ist, daß sich eine sphärische Sitzverstellung ergibt.

2. Einrichtung nach Anspruch 1, **dadurch gekennzeichnet, daß** durch die Ansteuerung (24) jeweils zwei in Längsrichtung der Sitzfläche (32) gesehen hintereinander liegende Lagerungsbauteile (16; 28, 29, 40; 34, 35, 43) ansteuerbar sind.

3. Einrichtung nach Anspruch 1, **dadurch gekennzeichnet, daß** durch die Ansteuerung (24) jeweils zwei in Querrichtung der Sitzfläche (32) gesehen nebeneinander liegende Lagerungsbauteile (16; 28, 29, 40; 34, 35, 43) ansteuerbar sind.

4. Einrichtung nach Anspruch 1, **dadurch gekennzeichnet, daß** angetriebene Lagerungsbauteile in Kugelschalenform (43) oder als Gleitpolster (34, 35) ausgebildet, denen eine gemeinsame Verstelleinheit (38) zugeordnet ist, die Sitzfläche (32) des Fahrzeugsitzes verdrehen.

5. Einrichtung nach Anspruch 1, **dadurch gekennzeichnet, daß** ein den Fahrzeugsitz unterstützender Gleitschuhhalter (3) mit Gleitschuhen (2) versehen ist, die in Gleitschuhführungen bewegbar sind, deren obere Endposition durch einen Anschlag (11) begrenzt ist.

6. Einrichtung nach Anspruch 1, **dadurch gekennzeichnet, daß** unterhalb eines Fahrzugsitzes zwei Viergelenkketten aus Starrlenkern (28) angeordnet sind, die schräg zueinander angeordnet, mittels einer gemeinsamen Verstelleinheit (38) betätigbar sind, wobei der Momentalpol (30) sich in einem Abstand (33) über der Sitzfläche (32) befindet.

7. Einrichtung gemäß Anspruch 1, **dadurch gekennzeichnet, daß** der Fahrzeugsitz im hinteren Bereich von zwei schräg zueinander positionierten Starrlenkern (28) und von einem tiefer angeordneten vorderen Lenker (40) unterstützt ist, wodurch eine schräg verlaufende, eine Seitenverstellung der Sitzfläche (32) des Fahrzeugsitzes unterstützende Drehbewegung erzeugt wird.

8. Einrichtung gemäß Anspruch 7, **dadurch gekennzeichnet, daß** dem vorderen Lenker (40) und den hinteren Starrlenkem (28) jeweils eine separate Verstelleinheit (38, 41) zugeordnet sind.

9. Einrichtung gemäß Anspruch 1, **dadurch gekennzeichnet, daß** einem beweglichen vorderen Lenker (39) eine separate Verstelleinheit (41) zugeordnet ist, die eine Verdrehbewegung der Sitzfläche (32) des Fahrzeugsitzes zur Fahrzeugtür hin ermöglicht.

10. Einrichtung gemäß Anspruch 1, **dadurch gekennzeichnet, daß** eine kugelschalenförmige Verstellkulisse (43) von Gleitpolstern (34) unterstützt ist, die an Aufnahmeelementen (35) abgestützt sind, die an Lagerungsschienen (37), die mittels einer Verstelleinheit (38) positioniert werden können.

11. Einrichtung gemäß Anspruch 1, **dadurch gekennzeichnet, daß** die kugelschalenförmige Verstellkulisse (43) direkt von verfahrbaren Aufnahmeelementen (35) unterstützt ist.

## Claims

1. Device for displacing a vehicle seat which can be displaced in its position via one or more geared motors (8, 38, 41, 42), the geared motors (8, 38, 41, 42) being actuable via an activating means (24) and the device having a vehicle-seat substructure (3, 32, 45) which can be mounted by mounting components (16; 28, 29, 40; 34, 35, 43) at at least three points of a vehicle, **characterized in that** at least one mounting point (16, 29, 34) can be varied relative to the remaining bearing points of the vehicle in such a manner that a spherical seat displacement is produced.

2. Device according to Claim 1, **characterized in that** two mounting components (16; 28, 29, 40; 34, 35, 43) situated one behind the other as seen in the longitudinal direction of the seat surface (32) can be activated in each case by the activating means (24).

3. Device according to Claim 1, **characterized in that** two mounting components (16; 28, 29, 40; 34, 35, 43) situated next to each other as seen in the transverse direction of the seat surface (32) can be activated in each case by the activating means (24).

4. Device according to Claim 1, **characterized in that** driven mounting components designed in a spherical-shell shape (43) or as sliding cushions (34, 35) and which are assigned a common displacing unit (88) rotate the seat surface (32) of the vehicle seat.

5. Device according to Claim 1, **characterized in that** a sliding-shoe holder (3) supporting the vehicle seat is provided with sliding shoes (2) which can be moved in sliding-shoe guides, the upper end position of which is delimited by a stop (11).

6. Device according to Claim 1, **characterized in that** two four-bar chains of rigid links (28) arranged obliquely with respect to one another are arranged below the vehicle seat and can be actuated by means of a common displacing unit (38), the instantaneous centre of rotation (30) being situated at a distance (33) above the seat surface (32).

7. Device according to Claim 1, **characterized in that** the vehicle seat is supported in the rear region by two rigid links (28) positioned obliquely with respect to each other and by a front link (40) arranged lower down, as a result of which a rotational movement which runs obliquely and supports a lateral displacement of the seat surface (32) of the vehicle seat is produced.

8. Device according to Claim 7, **characterized in that** the front link (40) and the rear rigid links (28) are in each case assigned a separate displacing unit (38, 41).

9. Device according to Claim 1, **characterized in that** a movable front link (39) is assigned a separate displacing unit (41) which permits a rotational movement of the seat surface (32) of the vehicle seat towards the vehicle door.

10. Device according to Claim 1, **characterized in that** a spherical-shell-shaped displacing slotted guide (43) is supported by sliding cushions (34) which are supported on holding elements (35) which are fastened to mounting rails (37) which can be positioned by means of a displacing unit (38).

11. Device according to Claim 1, **characterized in that** the spherical-shell-shaped displacing slotted guide (43) is directly supported by movable holding elements (35).

## Revendications

1. Dispositif de réglage d'un siège de véhicule automobile pouvant être réglé en sa position au moyen d'un ou de plusieurs moteurs de transmission (8, 38, 41, 42), les moteurs de transmission (8, 38, 41, 42) pouvant être actionnés par une commande (24), le dispositif présentant un socle (3, 32, 45) de siège de véhicule automobile pouvant être logé par des pièces de logement (16 ; 28, 29, 40 ; 34, 35, 43) en au moins trois points d'un véhicule automobile,
**caractérisé en ce qu'**
au moins un point de logement (16, 29, 34) peut être déplacé de manière telle par rapport aux points de logement restants du véhicule automobile qu'il en résulte un réglage sphérique de siège.

2. Dispositif selon la revendication 1,
**caractérisé en ce que**
chaque fois deux pièces de logement (16 ; 28, 29, 40 ; 34, 35, 43) figurant l'une derrière l'autre vues transversalement à la surface de siège (32) peuvent être commandées par la commande (24).

3. Dispositif selon la revendication 1,
**caractérisé en ce que**
chaque fois deux pièces de logement (16 ; 28, 29, 40 ; 34, 35, 43) figurant l'une à côté de l'autre vues transversalement à la surface de siège (32) peuvent être commandées par la commande (24).

4. Dispositif selon la revendication 1,
**caractérisé en ce que**
des pièces de logements entraînées sont en forme de coquille sphérique (43) ou de bourrelet de glissement (34, 35) auxquelles une unité de réglage (38) commune est affectée qui décalent en rotation la surface de siège (32) du siège de véhicule automobile.

5. Dispositif selon la revendication 1,
**caractérisé en ce qu'**
un support de patin de glissement (3) supportant le siège de véhicule automobile est pourvu de patins de glissement (2) mobiles dans des guides de patin de glissement dont la position finale supérieure est limitée par une butée (11).

6. Dispositif selon la revendication 1,
**caractérisé en ce que**
sous un siège de véhicule automobile, deux chaînes à quadruple articulation en guidages rigides (28) sont disposées, disposées en biais les uns par rapport aux autres, actionnables au moyen d'une unité de réglage (38) commune, le centre de rotation (30) figurant à distance (33) au-dessus de la surface de siège (32).

7. Dispositif selon la revendication 1,
**caractérisé en ce que**
le siège de véhicule automobile est supporté dans la zone arrière par deux guidages rigides (28) disposés en biais l'un par rapport à l'autre et par un guidage avant (40) disposé plus bas, ce par quoi un mouvement de rotation en biais, supportant un réglage latéral de la surface de siège (32) du siège de véhicule automobile, est créé.

8. Dispositif selon la revendication 7,
**caractérisé en ce qu'**
une unité séparée de réglage (38, 41) est à chaque fois attribuée au guidage avant (40) et aux guidages rigides (28) arrières.

9. Dispositif selon la revendication 1,
**caractérisé en ce qu'**
une unité séparée de réglage (41) est attribuée à un guidage avant (39) mobile, qui permet un mouvement de décalage en rotation du siège (32) du siège de véhicule automobile en direction de la portière du véhicule automobile.

10. Dispositif selon la revendication 1,
**caractérisé en ce qu'**
une coulisse de réglage (43) en forme de coquille sphérique est supportée par des bourrelets de glissement (34) qui sont supportées par des éléments de réception (35) pouvant être positionnés sur des rails de logement (37) au moyen d'une unité de réglage (38).

11. Dispositif selon la revendication 1,
**caractérisé en ce que**
la coulisse de réglage (43) en forme de coquille sphérique est supportée directement par des éléments de réception (35) déplaçables.
